# EUROPEAN PATENT APPLICATION

(11) **EP 4 386 615 A1**
(43) Date of publication of application: **19.06.2024**
(21) Application number: 22214380.2
(22) Date of filing: 16.12.2022
(51) Int. Cl.: G06F 40/109, G06F 40/30, G06F 40/279, G06F 40/103, G06F 3/048, G06F 16/93, G09B 17/00

(54) **METHOD AND SYSTEM FOR IMPROVING IMMERSIVE READING OF ELECTRONIC DOCUMENTS**

(30) Priority: 15.12.2022 PT 2022118397
(71) Applicant: NOS Inovação, S.A., 4460-191 Senhora da Hora (PT)
(72) Inventor: PINTO SEQUEIRA DOS SANTOS GRAÇA, JORGE FILIPE, 4460-191 SENHORA DA HORA (PT); NUNES FERREIRA, JOÃO MIGUEL, 4460-191 SENHORA DA HORA (PT); TIDÓ, EMANUELE, 4460-191 SENHORA DA HORA (PT); COUTINHO DE SOUSA, JOANA, 4460-191 SENHORA DA HORA (PT)
(74) Representative: do Nascimento Gomes, Rui

(57) **Abstract**

The present application relates to a computer implemented method comprising an ordered set of processing steps, used to formally adapt text (1) to be displayed on an e-reader (2), in order to provide an enhanced and more immersive reading experience to the reader, allowing to reduce wandering vision and reading time, thereby improving the efficiency of an e-reader used by the reader. The method comprises the steps of: receiving the original text to be formatted (a.); parsing each sentence of the text into words (b.); identifying keywords from the set of words of the sentence (c.) and applying different text formatting rules to words (d1.) and keywords (d2.) of the sentence.

## Description

### FIELD OF THE APPLICATION

The present application relates generally to computerized text presentation. More particularly, the application relates to system and methods for displaying electronic documents in a manner that fosters an immersive reading experience.

### PRIOR ART

Traditional typesetting practices (involving movable type) involve a mechanical arrangement of types to be printed on paper. Such arrangement includes a selection of typefaces, type size, and spacing between letters and lines. With the advent of computers and word processing software, typesetting has become mostly automated. As such, users of modern word processing software rarely adjust the typesetting beyond font selection and line spacing. As computers have become smaller and more powerful, there have been recent efforts to provide portable, hand-held computers (electronic reading devices, ie., e-readers) for rendering electronic content in a manner that is similar or identical to the way content is presented in a printed paper book or other document. Thus, much effort has been put into providing a user interface for e-readers that promotes an immersive reading experience.

Prior art methods of displaying information generally use computer-based algorithms to adapt the formatting settings of the displayed text in order to enlarged or shown in great detail the foremost content of interest while the adjacent content, often just landmarks, is reduced in size proportionally as distance increases. This enables the reader to perceive the entire content while focusing on the salient content. However, when presented with text, readers may often have their vision wander or face troubles in interpreting the text presented. These difficulties may be the result of a poorly chosen font, poor line spacing or angling, or another element on the page drawing the readers' attention.

Wandering vision and interpretation problems are particularly common when readers use an e-reader, when dealing with unfamiliar words or struggling with a learning disability, such as dyslexia. As a consequence, for example, the reader may miss a portion of the text, by skipping to a word or line later in the text or may repeat a portion of the text by skipping to a word or line earlier in the text. He may skip or misread a word in text when interpretation problems arise.

Such issues end up increasing the reading time of a text, unnecessarily prolonging the reader's session. A prolonged session will require an e-reader to expend more power, which is of particular concern on mobile e-readers that draw power from batteries, and may require additional processing resources to be expended to break the text into more pages (e.g., in response to a request for a larger font).

Accordingly, it would be advantageous to provide new mechanisms that maximize the potential for the readers to have an immersive reading experience, while ensuring efficient use of an electronic reading device by the reader.

The present solution intended to innovatively overcome such issues.

### SUMMARY OF THE APPLICATION

It is therefore an object of the present application a computer implemented method that provides an enhanced and more immersive reading experience to the reader, allowing to reduce wandering vision and reading time, thereby improving the efficiency of an electronic reading device (e-reader) used by the reader.

It is also an object of the present application, an automatic text recognition and transformation system adapted to operate according to the method herein described. This system can be available locally on a single device (e-reader) or can be accessed remotely, as it can be hosted in the cloud, running only the application on the reader's device.

The reader is a human user of e-readers, which can be any type of computing device used for reading. Examples of this type of devices: personal computer, laptop, tablets, smartphones, e-readers (Kidle, Kubo, etc.) or even STBs. The text that is presented to the reader, despite maintaining the structure that the author defined, can be presented through changes in the font of the letters, in the spacing of the paragraph, in the colour of the letters, in the symbology of the words and/or insertion of illustrations of background for representation of the text.

### DESCRIPTION OF FIGURES

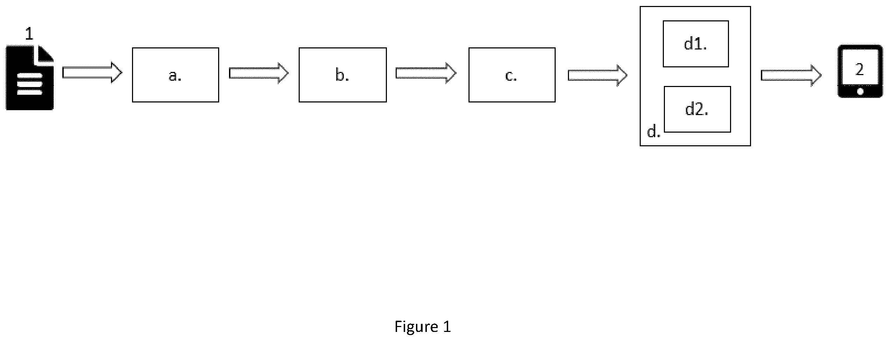

Figure 1 - illustration of the computer implemented method steps responsible for formatting a text to be presented to a reader on a e-reader, in a way that it provides an enhanced and more immersive reading experience to the reader, thereby improving the efficiency of an e-reader; the reference signs represent:
   1- original text;
      a. - receiving the original text;
      b. - parsing each sentence of the text into words;
      c. - identifying keywords from the set of words of the sentence;
      d. - applying different text formatting rules to words (d1.) and keywords (d2.) of the sentence.
   2- formatted text to be displayed on an e-reader.

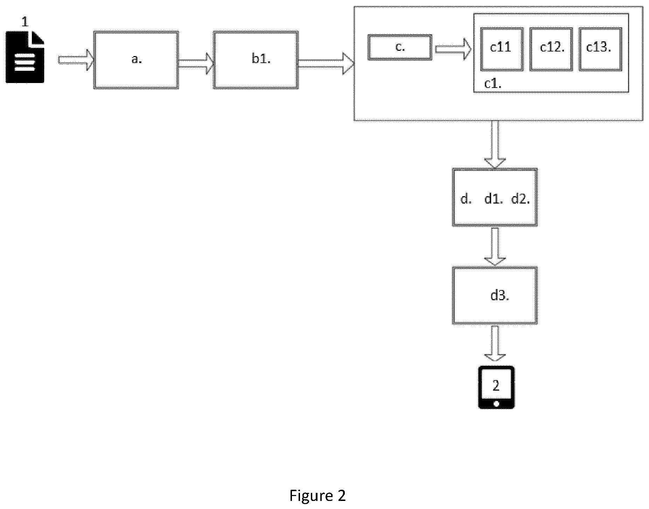

Figure 2 - representation of an embodiment of the method described in the present application, comprising the steps of:
   a. - receiving an original text (1) to be formatted;
   b1.- after parsing each sentence of the text into words, creating artificial fixation points in words;
   c. - identifying keywords from the set of words of the sentence;
   c1. - comprehension mode;
   c11. - entity for adjectives;
   c12. - entity for onomatopes;
   c13. - entity for emotions;
   d. - applying different text formatting rules to words (d1.) and keywords (d2.) of the sentence.
   d3. - generation of a background image.
   2 - formatted text to be displayed on an e-reader.
Figure 3 - Flow diagram of an embodiment of the method developed, showing the identification and transformation of adjectives.
Figure 4 - Flow diagram of an embodiment of the method developed, showing the identification and transformation of onomatopoeias.
Figure 5 - Flow diagram of an embodiment of the method developed, showing the identification of emotions.

### DETAILED DESCRIPTION

The more general configurations of the present application are described in the Summary of the application. Such configurations are detailed below in accordance with other advantageous and/or preferred embodiments of implementation of the technology now developed.

The present application relates to a computer implemented method comprising an ordered set of processing steps, used to formally adapt text (electronic document) to be displayed on an e-reader, in order to provide an enhanced and more immersive reading experience to the reader, allowing to reduce wandering vision and reading time, thereby improving the efficiency of an electronic reading device (e-reader) used by the reader.

More particularly, efficiency of the e-reader is improved by reducing the processing resources required to address the reformatting configurations of the text presented on the e-reader, shortening the time to read a given text and thus reducing power draw by the e-reader, and improving the core functionality of the e-reader itself in providing text to the reader in a more legible format.

In the context of present application, a formal adaptation to a text technically means applying a set of pre-defined formatting rules, excluding any other type of adaptation that promotes a change in the content or meaning of the text. The formatting rules are related to a set of alterations to improve the readability of the text, namely, to the way in which the words and respective letters that form the sentences of the text are presented.

In a preferred embodiment, the computer implemented method comprises the following steps:
i. receiving a text to be presented to a reader using an electronic reading device; the text comprising at least one sentence, the sentence comprising words, a word comprising letters;
ii. parsing each sentence of the text into words;
iii. identifying at least one keyword from the set of words of the sentence;
iv. applying text formatting rules to words of the sentence, wherein a different formatting rule is applied to keywords; the formatting rules concerning at least configuring:
   - spacing between letters of a word;
   - font size and colour of at least one letter of a word.

The formatting rules may also include active line and active word highlighting, unfocused line lowlighting, font type and style configurations such as applying bold or italic to a font, line spacing or de-focusing techniques. By "highlight", it means that a portion that is highlighted is visually distinguished from all other portions of text/word displayed. Highlighting may emphasize the highlighted text, e.g. making it the most prominent text displayed, or de-emphasize it, e.g. making it the least prominent text on the display. The differentiation may be achieved with boldness of the font, the colour, or the size, for example, or by techniques such as "de-focusing" text.

As a consequence of identifying keywords in a sentence and applying keyword-specific formatting rules that are different from those applied to the rest of the words in the sentence, it is possible to improve the readability of the text displayed on the e-reader, by reducing wandering vision and reading time, thereby improving the efficiency of the e-reader used by the reader.

In one embodiment, the method further comprises the step of creating artificial fixation points in at least one word of a sentence, by highlighting at least the initial letters of the word, such that the highlighted portion of the word is more prominent that the non-highlighted portion. The highlighting may be applied to the first syllable of a word. As a consequence of applying this typographic highlighting, the eyes of the reader are guided through the text causing a visual stimulus that has a positive effect on improving the reading speed, and thereby reducing the reader's session.

In another embodiment, the method, further comprises the steps of implementing a comprehension mode, involving:
- inputting the text into an entity extraction model; said model comprising a plurality of entities, each entity corresponding to a word category;
- associating at least a keyword in the sentence to an entity;
- interpreting the meaning of a keyword according to the associated entity;
- applying formatting rules according to the meaning of the keyword.

The entity extraction model may comprise at least an entity for adjectives and nouns expressing superiority and an entity for adjectives and nouns expressing inferiority. The model may further comprise a dictionary table including for each entity a corresponding list of words, and, therefore, the step of associating a keyword to an entity may involve matching the keyword in a sentence with a word in said dictionary table.

More particularly, a keyword may be an adjective or/and a noun that expresses quantity and quality. If the keyword represents inferiority, it is applied a formatting rule such that said keyword is presented in lowercase and the spacing between the letters of the word is reduced. Alternatively, if the keyword represents superiority, a different formatting rule is applied such that said keyword is presented in capital letters and the spacing between the letters of the word is increased.

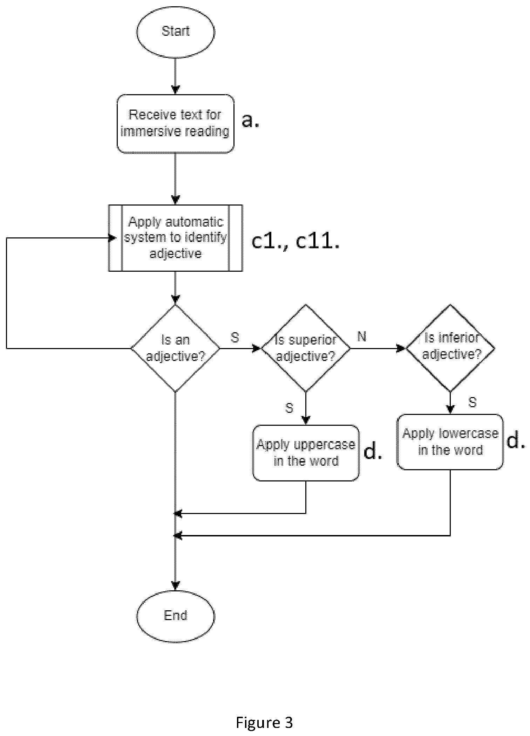

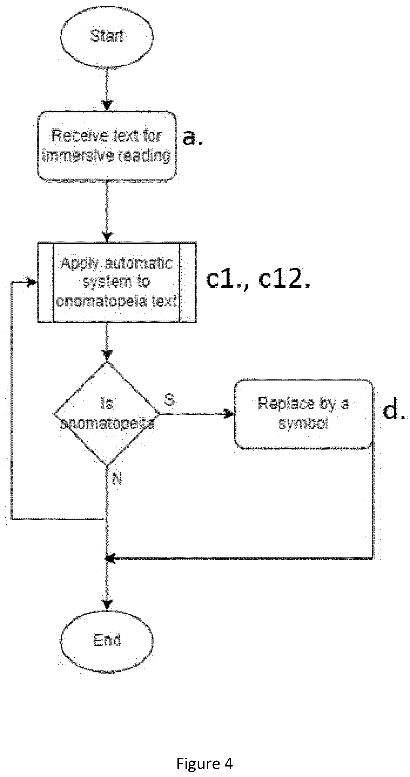

Figure 3 represents an exemplary flowchart of the various stages involved in identifying an adjective and transforming it according to its category. This flow starts when the original text is received, to be transformed in an immersive way. It is in this text that an automatic step of identifying adjectives of superiority and inferiority is applied. This automatic step consists of a model for extracting personalized entities from the text. Two entities may be created: "High" for adjectives that describe superiority and "Low" for adjectives that describe inferiority. A third entity may also be created "Key" to identify grammatically recognized nouns so that it is possible to have a representative image of the text, as illustrated in figure 4.

Therefore, the implementation of a comprehension mode allows to apply formatting rules to words and keywords, according to their meaning, offers greater accessibility and interpretation of the text, and also provides the reader with an emotional and more immersive reading experience.

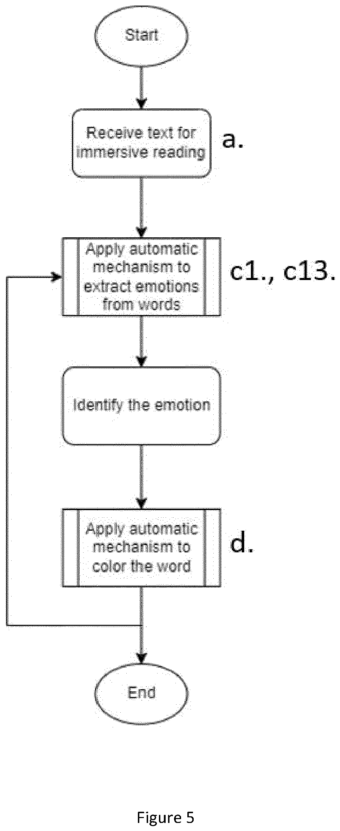

More particularly, the comprehension mode allows the detection of emotions that can be extracted from the text, and the application of specific formatting rules to the respective keywords, such as applying a particular colour font that is consistent with the detected emotion. Figure 5 represents a flow for identifying the emotions in the text. For this, an automatic step of sentimental text analysis may be integrated. This analysis may return three types of results: Positive, Negative and Neutral. From this analysis, the text colour may be changed consistent with the result obtained.

The implementation of a comprehension mode also allows formatting rules to replace keywords in the text with images or symbols, which is especially advantageous when the reader is a child. In one embodiment, the entity extraction model may further comprise an entity for grammatically recognized nouns. Additionally, it may also comprise an image table, including a set of grammatically recognized nouns associated to a correspondent symbol or image. Therefore, the step of associating a keyword to an entity may involve matching the keyword in a sentence with corresponding symbol or image in the image database. In this case, a text formatting rule may be applied in order to replace in the text, a keyword in a sentence, representing a grammatically recognized noun, such as an onomatopoeia or an object, by the correspondent symbol or image - see figure 4.

In another embodiment, the method further comprises the step of generating an image background based on the meaning of at least one keyword of the text. More particularly, the comprehension mode is further adapted to identify the most representative keyword based on the meaning that is extracted from each word, and based on that, generating a specific background image over which the text will be presented. The configuration of a background image consistent with the content and overall meaning of the text, allows the creation of an emotional and more immersive reading environment.

It is also an object of the present application, an automatic text recognition and transformation system comprising a processing module configured to operated according to method already described.

Figure 2 is a block diagram illustrating an embodiment of the automatic text recognition and transformation system, and its processing modules that are operable to transform any type of text to be presented on a e-reader, such as a poem, into an emotionally immersive environment. In this embodiment, it is included: a receiver module, adapted to receive the original text (a.) that will serve as input for the remaining modules, a typographic highlighting module (b1.) that allows placing bold letters in the words to provide a faster reading, an automatic text recognition module (c1,), that implements a comprehension mode, that includes 3 blocks: a block for identifying adjectives (c11.) and transforming them, as well as extending the sentence or shortening it according to the type of adjective (d.); a block for identifying onomatopoeia words (c12.) that are transformed into "symbols" (d.) and a block for identifying emotions (c13.) through words and transforming them in terms of colour associated with the identified emotion (d.). The system also includes a word recognition module, for generating a background image (d3.) as representative of the poem's theme. In the end, all the aforementioned modules and blocks are integrated in a cyclical way, generating the final text (2) as an emotionally immersive text for the reader.

In one embodiment, the processing module is cloud-based and the system further comprises at least one electronic reading device and a wireless communication network, that is configured to interconnect the electronic reading devices and the cloud-based processing module.

Alternatively, the processing module is local-based, being included in an e-reader.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A computer implemented method comprising the steps of:
i. receiving a text to be presented to a reader using an electronic reading device; the text comprising at least one sentence, the sentence comprising words, a word comprising letters;
ii. parsing each sentence of the text into words;
iii. identifying at least one keyword from the set of words of the sentence;
iv. applying text formatting rules to words of the sentence, wherein a different formatting rule is applied to keywords; the formatting rules concerning at least configuring:
- spacing between letters of a word;
- font size and colour of at least one letter of a word.

2. The method according to claim 1, wherein formatting rules further includes applying:
- boldness to a font;
- line spacing;
- de-focusing techniques.

3. The method according to claim 1 or 2, further comprising the step of:
- creating artificial fixation points in at least one word of a sentence, by highlighting at least the initial letters of the word, such that the highlighted portion of the word is more prominent that the non-highlighted portion.

4. The method according to claim 3, wherein the highlighting is applied to the first syllable of a word.

5. The method according to any of the previous claims, further comprising the steps of implementing a comprehension mode, involving:
- inputting the text into an entity extraction model; said model comprising a plurality of entities, each entity corresponding to a word category;
- associating at least a keyword in the sentence to an entity;
- interpreting the meaning of a keyword according to the associated entity;
- applying formatting rules according to the meaning of the keyword.

6. The method according to claim 5, wherein the entity extraction model comprises at least:
- an entity for adjectives and nouns expressing superiority;
- an entity for adjectives and nouns expressing inferiority;
and wherein,
the model further comprises a dictionary table including for each entity a corresponding list of words; and
the step of associating a keyword to an entity comprises:
- matching the keyword in a sentence with a word in the dictionary table.

7. The method according claim 5 or claim 6, wherein a keyword is an adjective or/and a noun that expresses quantity and quality; and wherein,
If the keyword represents inferiority, applying a formatting rule such that said keyword is presented in lowercase and the spacing between the letters of the word is reduced; and
If the keyword represents superiority, applying a formatting rule such that said keyword is presented in capital letters and the spacing between the letters of the word is increased.

8. The method according to claim 6 or 7, wherein the entity extraction model further comprises:
- an entity for grammatically recognized nouns; and
- an image table, including a set of grammatically recognized nouns associated to a correspondent symbol or image;
and wherein,
the step of associating a keyword to an entity comprises:
- matching the keyword in a sentence with corresponding symbol or image in the image database;
and wherein,
the text formatting rules further comprises:
- replacing at least a keyword in a sentence, representing a grammatically recognized noun, by the correspondent symbol or image.

9. The method according to claim 8, wherein the keyword is an onomatopoeia or the keyword represents an object.

10. The method according to any of the previous claims 5 to 9, wherein the colour of the letters of a keyword is configured depending on the meaning of said keyword.

11. The method according to any of the previous claims 5 to 10, further comprising the step of:
- generating an image background based on the meaning of at least one keyword of the text.

12. The method according to claim 11, wherein the comprehension mode is further adapted to identify the most representative keyword based on the meaning that is extracted from each word; the image background being generated based on the most representative keyword.

13. An automatic text recognition and transformation system comprising a processing module configured to operated according to claims 1 to 12.

14. The system according to claim 12, wherein, the processing module is cloud-based; and the system further comprises at least one electronic reading device and a wireless communication network configured to interconnect the electronic reading devices and the cloud-based processing module.

15. An electronic reading device comprising processing means adapted to execute the method of claims 1 to 12.
